# EUROPEAN PATENT APPLICATION

(11) **EP 3 751 529 A1**
(43) Date of publication of application: **16.12.2020**
(21) Application number: 19179775.2
(22) Date of filing: 12.06.2019
(51) Int. Cl.: G07F 11/00, G06Q 20/18, G07F 7/06

(54) **A METHOD, A BEVERAGE CONTAINER RECYCLER AND A BEVERAGE CONTAINER DETECTOR**

(71) Applicant: Pure Recycle Oy, 90520 Oulu (FI)
(72) Inventor: Almen, Kari, 33820 Tampere (FI)
(74) Representative: Koivisto, Harri Kristian

(57) **Abstract**

A beverage container detector, a beverage container recycler and a method are disclosed. The detector comprises an inlet (10) for receiving a beverage container (15); an optical reader (14) for detecting a visual information from the beverage container (15) at a read position (17). The inlet (10) comprises a holder (13) for positioning the beverage container (15) before entering the read position (17); an actuator for ejecting the beverage container (15) from the holder (13) to the read position (17), wherein the ejecting motion rotates the beverage container (15); and the optical reader (14) is configured to read the visual information during the ejecting motion.

## Description

### BACKGROUND

The present disclosure relates to a device and a method for detecting visual information from a beverage container for use with beverage container recyclers or reverse vending machines.

Beverage container recyclers are used to detect used, empty containers and to enable recycling. In supermarkets large reverse vending machines may be utilized, wherein a consumer inserts the empty beverage container to the reverse vending machine and receives a payment or a token in return. Some countries, such as Finland, have a centralized recycling system for empty beverage containers.

Reverse vending machines are typically large, bulky devices that occupy a large space. Handling large amount of empty beverage containers requires storage space. Beverages are used in large quantities in restaurants or cafes that usually have limited storage space. Therefore, there is a need for less bulky device for recycling beverage containers that may alleviate the problem of recycling in restaurants or cafes.

The visual information embedded into the beverage container is known to be detected by rotating the beverage container over two rollers until the visual information has been rotated within the visual range of an optical detector. When a waiter or a bartender collects empty beverage containers, they should be unloaded quickly. The busy restaurant environment does not allow slow recycling systems, wherein the waiter or the bartender should wait before being able to unload multiple beverage containers. Therefore, there is a need for quick and compact recycling system having a fast detector device.

### SUMMARY

This summary is provided to introduce a selection of concepts in a simplified form that will be further described below in the detailed description. This summary is intended to neither identify key features or essential features of the claimed subject matter nor to be used to limit the scope of the claimed subject matter. Furthermore, the claimed subject matter is not limited to implementations that solve any or all of the disadvantages noted in any part of this disclosure.

There is provided a beverage container detector for a beverage container recycler, a method for detecting a visual information from a beverage container recycler and the beverage container recycler. The beverage container recycler may be a reverse vending machine.

The beverage container detector is used for example to detect the beverage container type, in order to issue a payment or a token in return for the recyclable beverage container. The beverage containers are equipped with visual detectors for reading visual information, such as barcodes or QR codes. The detector has an optical reader for detecting the visual information from the beverage container at a read position. One example of the read position is the beverage container being rotated between two parallel rollers.

The detector has a holder for positioning the beverage container before entering the read position. An actuator ejects the beverage container from the holder to the read position. The beverage container is aligned transversely to the direction of travel. Beverage containers are typically cylindrical, wherein the beverage container is configured to rotate when entering the read position. The ejecting motion is, according to one example, a flange that lifts the beverage container onto a first roller, wherein the first roller is at the read position. As the flange continues to lift the beverage container, it rolls over the first roller to the read position to be supported by two rollers. While rolling over the first roller the beverage container exposes the outer surface to the optical reader. The optical reader reads the visual information when the beverage container rolls over the first roller.

If the beverage container has exposed the visual information to the optical reader before reaching the read position, there is no more need to rotate the beverage container over the two rollers as the beverage container recycler has already detected the beverage container. The beverage container may proceed to the next stage in the recycler process, for example to sorting or compacting.

The beverage container recycler has multiple functions, such as receiving multiple beverage containers, detecting the beverage container type and issuing the reimbursement for the beverage container. In the present example the recycler compacts the beverage container after registering the container type. The compacting may comprise crushing or pressing the beverage container to smaller space, removing the air from inside the beverage container. The compacted, empty beverage containers are much easier to store and deliver to further recycling facility.

The flange structure allows the beverage container structure to be compact and suitable for restaurant use. In one use case, a waiter collects beverage containers from the tables and inserts them into the beverage container recycler. The inlet is in one example configured to receive multiple beverage containers simultaneously, while processing them one by one. The beverage container recycler may reside at a logistically convenient place, wherein the waiter is not required to carry the beverage containers to unnecessary distances. Compact dimensions enable the restaurant process to be planned more freely. Alternatively, or in addition, the bartender may insert empty beverage containers to the recycler residing behind the bar counter.

As the ejecting motion is utilized to identify the beverage container, the detection phase is faster. Overall, the time saved by utilizing the ejecting motion on multiple beverage containers inserted to the may be up to several seconds. In professional use, such as in restaurants, the saved time accumulates when multiple beverage containers are processed at the recycler. The saved time enables the personnel to unload the carried, empty beverage containers faster, and to proceed with other tasks.

Many of the attendant features will be more readily appreciated as they become better understood by reference to the following detailed description considered in connection with the accompanying drawings. The embodiments described below are not limited to implementations which solve any or all the disadvantages of known detector systems.

### BRIEF DESCRIPTION OF THE DRAWINGS

The present description will be better understood from the following detailed description read in light of the accompanying drawings, wherein
FIG. 1 illustrates one example of an embodiment;
FIG. 2 illustrates one exemplary embodiment of the beverage container recycler housing; and
FIG. 3 is a cross-sectional view of the beverage container recycler housing;

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or any equivalent functions and sequences may be accomplished by different examples.

Although the present examples are described and illustrated herein as being implemented as a detector in a beverage container recycler, the beverage container recycler and a method of detecting the beverage container in the beverage container, they are provided as an example and not a limitation. As those skilled in the art will appreciate, the present examples are suitable for application in a variety of different types of recycling devices and reverse vending machines.

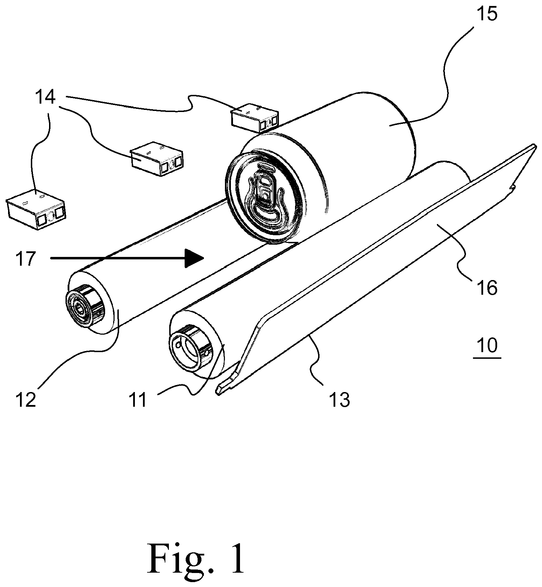

An exemplary embodiment of the detector is disclosed schematically in FIG. 1. This illustration focuses only to the detector assembly within the beverage container recycler. The detector may comprise multiple components of the beverage container recycler.

The detector comprises an inlet 10 for receiving the beverage container 15 from another location. Examples of another location are previous stage of the beverage container recycler or an inlet tray where the user puts the empty beverage container 15 to be processed. The inlet tray leading to the inlet 10 may be slightly tilted to cause the beverage container 15 to roll gravitationally to the inlet 10.

An optical reader 14 is configured to read a visual information from the beverage container 15. The visual information is for example a visual code, barcode, QR code or a proprietary code configured to detect and/or classify the beverage container 15. The visual code may be printed or attached to a bottle label or painter to the beverage can.

The inlet 10 comprises a holder 13 for positioning the beverage container 15 before it reaches a read position 17. The holder 13 may be configured to align the beverage container 15 transversely to the direction of travel, if the user has put the beverage container 15 onto the inlet tray carelessly. In one embodiment, the inlet 10 comprises a lower portion of the inlet tray, having a slot for beverage container 15 configured to travel over the holder 13 in transverse orientation to the direction of travel. Typically, beverage containers 15 are bottles or cans made of metal, glass or plastic, that rotate when positioned lying on a tilted flat surface.

An actuator is configured to eject the beverage container 15 from the holder 13 to a read position 17. In the read position 17 the visual code is read by the optical reader 14. In the present example the device comprises three optical readers 14 to enable extended read zone. The read position 17 is defined in a space between and above a first roller 11 and a second roller 12, and the space in the vicinity of the first roller 11 where the beverage container passes over the first roller 11. The rollers 11, 12 are configured to rotate the beverage container 15 until the visual information is detected or until a predetermined time limit for detecting the visual information expires. At least one optical reader 14 is, in one exemplary embodiment, positioned above the horizontal plane defined by the first roller 11 and the second roller 12. At least one optical reader 14 may be positioned below the rollers 11, 12. The first roller 11 and the second roller 12 are configured to move apart to allow the beverage container 15 to fall and proceed into the next stage, below the rollers 11, 12 in the beverage container recycler.

An actuator is configured to eject the beverage container 15 from the holder 13 to the read position 17. The ejecting motion is configured to rotate the beverage container 15. At least one optical reader 14 is configured to read the visual information during the ejecting motion. In one embodiment the holder 13 comprises a flange 16 connected to the actuator, wherein the flange 16 is configured to reciprocate between a flat position and a raised position. In the flat position the beverage container 15 rotates over the flange 16. As the flange 16 moves to the raised position, it ejects the beverage container 15 to the read position 17.

In one embodiment the inlet 10 comprises a flat slanted path configured to allow the beverage container to roll against the first roller 11 when the flange 16 is in the flat position. The flat slanted path may be configured as an extension to the inlet tray. The flange 16 is configured to eject the beverage container 15 from being in contact with the first roller 11 to between the first roller 11 and the second roller 12, when the flange 16 travels from the flat position to the raised position. The ejecting motion causes the beverage container 15 to rotate along the first roller 11 as the beverage container 15 passes over the first roller 11. This exposes more surface to the optical reader 14, thereby increasing the probability to detect the visual information from the beverage container 15 during the ejecting motion. If the optical reader 14 fails to detect the visual information, the first roller 11 and the second roller 12 may rotate the beverage container 15 further, in order to expose the visual information to the optical reader 14.

The beverage container recycler comprises at least one processor and a memory for executing the instructions stored in the memory. In one embodiment the beverage container recycler comprises a transceiver for communicating to a computer network, for example to the Internet. After the detector has detected the beverage container 15, it issues a payment or a token in return to the beverage container 15. The beverage container recycler may crush or compact the beverage container 15 for easier storage and/or transport to further recycling facility. The information received from the intact beverage container 15 may be used only once, as the beverage container recycler may render the visual information unreadable, thereby enabling only one-time read of the beverage container 15. The amount of crushed or compacted beverage recyclers 15 in the storage may be verified by their weight. The restaurant or bar may store the beverage container 15 in significantly smaller space than with uncompacted, empty beverage containers 15. There is no need to keep the beverage containers 15 intact as the beverage container recycler has issued the payment, token or registered the beverage container 15 to be recycled, wherein the monetary transactions or reimbursements may be executed later. The restaurant or bar may focus on serving customers without excessive clutter hindering the routine tasks.

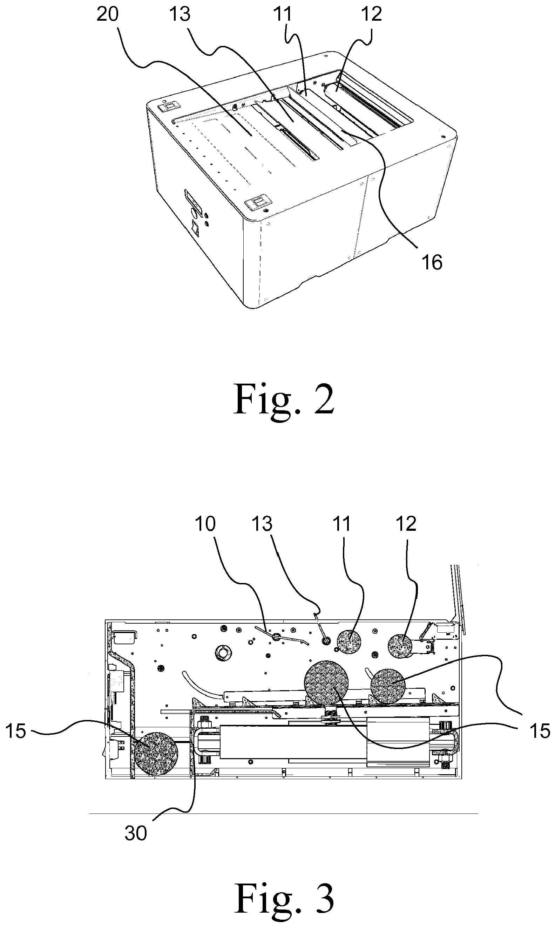

The beverage container recycler may be fitted into a compact space in the restaurant. FIG. 2 illustrates one exemplary embodiment of the beverage container recycler housing, having the inlet tray 20 and a beverage container detector 21. FIG. 3 is a cross-sectional view of the same exemplary beverage container recycler. The illustration shows multiple beverage containers 20 in various stages. The press 30 is configured to compress the beverage container 20, which may be dropped to a recycling bin positioned underneath the recycler.

A beverage container detector is disclosed herein. The detector comprises an inlet for receiving a beverage container; an optical reader for detecting a visual information from the beverage container at a read position; a holder for positioning the beverage container before entering the read position; an actuator for ejecting the beverage container from the holder to the read position, wherein the ejecting motion rotates the beverage container; and the optical reader is configured to read the visual information during the ejecting motion. In one embodiment, the holder comprises a flange connected to the actuator, wherein the flange is configured to reciprocate between a flat position and a raised position. In one embodiment, the read position comprises a first roller and a second roller configured to rotate the beverage container. In one embodiment, the inlet comprises a flat slanted path configured to allow the beverage container to roll against the first roller when the flange is in the flat position; and the flange is configured to eject the beverage container between the first roller and the second roller when the flange travels from the flat position to the raised position. In one embodiment, the optical reader is positioned above the read position.

Alternatively, or in addition, a beverage container recycler is disclosed, comprising the detector described hereinbefore.

Alternatively, or in addition, a method or detecting a visual information from a beverage container at a beverage container recycler is disclosed. The method comprises receiving a beverage container via an inlet; detecting a visual information from the beverage container at a read position by an optical reader; positioning the beverage container to a holder before entering the read position; ejecting the beverage container by an actuator from the holder to the read position; rotating the beverage container during the ejecting motion; and reading the visual information during the ejecting motion by the optical reader. In one embodiment, the holder comprises a flange connected to the actuator, and the method comprises reciprocating the flange between a flat position and a raised position. In one embodiment, the method comprises rotating the beverage container at the read position by a first roller and a second roller. In one embodiment, the method comprises allowing the beverage container to roll along a flat slanted path configured to the inlet against the first roller when the flange is in the flat position; and ejecting, by the flange, the beverage container between the first roller and the second roller when the flange travels from the flat position to the raised position. In one embodiment, the method comprises reading the visual information from above the read position.

Alternatively, or in addition, the detector functionality can be implemented, at least in part, by one or more hardware components or hardware logic components. An example of the control system described hereinbefore is a computing-based device comprising one or more processors, which may be microprocessors, controllers or any other suitable types of processors, for processing computer-executable instructions to control the operation of the device, in order to control one or more sensors, receive sensor data and use the sensor data. The computer-executable instructions may be provided using any computer-readable media accessible by a computing-based device. The computer-readable media may include, for example, computer storage media, such as memory and communication media. The computer storage media, such as the memory, includes volatile and non-volatile, removable and non-removable media implemented in any method or technology for storage of information, such as computer-readable instructions, data structures, program modules or other data. The computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, the communication media may embody computer-readable instructions, data structures, program modules, or other data in a modulated data signal, such as a carrier wave, or other transport mechanism. As defined herein, the computer storage media do not include the communication media. Therefore, a computer storage medium should not be interpreted to be a propagating signal per se. Propagated signals may be present in a computer storage medium, but propagated signals per se are not examples of computer storage media. Although the computer storage media are shown within the computing-based device, it will be appreciated that the storage may be distributed or located remotely and accessed via a network or other communication link, for example, by using a communication interface.

The system may comprise an input/output controller arranged to output display information to a display device which may be separate from or integral to the apparatus or device. The input/output controller is also arranged to receive and process input from one or more devices, such as a user input device (e.g. a mouse, keyboard, camera, microphone or other sensor).

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that any reference to 'an' item refers to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A beverage container detector, comprising:
an inlet (10) for receiving a beverage container (15);
an optical reader (14) for detecting a visual information from the beverage container (15) at a read position (17);
**characterized in that**:
the inlet (10) comprises a holder (13) for positioning the beverage container (15) before entering the read position (17);
an actuator for ejecting the beverage container (15) from the holder (13) to the read position (17), wherein the ejecting motion rotates the beverage container (15); and
the optical reader (14) is configured to read the visual information during the ejecting motion.

2. A beverage container detector according to claim 1, **characterized in that** the holder (13) comprises a flange (16) connected to the actuator, wherein the flange (16) is configured to reciprocate between a flat position and a raised position.

3. A beverage container detector according to claim 2, **characterized in that** the read position (17) comprises a first roller (11) and a second roller (12) configured to rotate the beverage container (15).

4. A beverage container detector according to claim 3, **characterized in that** the inlet (10) comprises a flat slanted path configured to allow the beverage container (15) to roll against the first roller (11) when the flange (16) is in the flat position; and the flange (16) is configured to eject the beverage container (15) between the first roller (11) and the second roller (12) when the flange (16) travels from the flat position to the raised position.

5. A beverage container detector according to any of the claims 1 to 4, **characterized in that** the optical reader (14) is positioned above the read position (17).

6. A beverage container recycler, comprising the beverage container detector according to any of the claims 1 to 5.

7. A method for detecting a visual information from a beverage container (15) at a beverage container recycler comprising:
receiving a beverage container (15) via an inlet (10);
detecting a visual information from the beverage container (15) at a read position (17) by an optical reader (14);
**characterized in that** the method comprises:
positioning the beverage container (15) to a holder (13) before entering the read position (17);
ejecting the beverage container (15) by an actuator from the holder (13) to the read position (17);
rotating the beverage container (15) during the ejecting motion; and
reading the visual information during the ejecting motion by the optical reader (14).

8. A method according to claim 7, **characterized in that** the holder (13) comprises a flange (16) connected to the actuator, and the method comprises reciprocating the flange (16) between a flat position and a raised position.

9. A method according to claim 7 or claim 8, **characterized by** rotating the beverage container (15) at the read position (17) by a first roller (11) and a second roller (12).

10. A method according to claim 9, **characterized by** allowing the beverage container (15) to roll along a flat slanted path configured to the inlet (10) against the first roller (11) when the flange (16) is in the flat position; and ejecting, by the flange (16), the beverage container (15) between the first roller (11) and the second roller (12) when the flange (16) travels from the flat position to the raised position.

11. A method according to any of the claims 7 to 10, **characterized by** reading the visual information from above the read position (17).
